# EUROPÄISCHE PATENTSCHRIFT

(11) **EP 1 279 340 B1**
(45) Veröffentlichungstag und Bekanntmachung des Hinweises auf die Patenterteilung: **10.05.2006**
(21) Anmeldenummer: 02015972.9
(22) Anmeldetag: 18.07.2002
(51) Int. Cl.: A23J 3/22, A23J 3/18, A23J 3/14

(54) **Lebensmittel mit texturierten Proteinen**
Food product containing texturised proteins
Produit alimentaire contenant des protéines texturées

(30) Priorität: 26.07.2001 DE 10138349; 18.09.2001 DE 10145983
(43) Veröffentlichungstag der Anmeldung: 29.01.2003
(73) Patentinhaber: Kampffmeyer Mühlen GmbH, 21107 Hamburg (DE)
(72) Erfinder: Albrecht, Jürgen, 31860 Emmerthal (DE)
(74) Vertreter: Hauck, Graalfs, Wehnert, Döring, Siemons

(56) Entgegenhaltungen:
- EP-B- 0 115 108
- WO-A-00/69276
- US-A- 5 336 517
- US-A- 5 593 717
- US-A- 5 804 246
- SANCHEZ-MARROQUIN A ET AL: "Evaluation of whole amaranth (Amaranthus cruentus) flour, its air-classified fractions, and blends of these with wheat and oats as possible components for infant formulas." JOURNAL OF FOOD SCIENCE 1986 NAT. INST. OF AGRIC. RES., MIAMI 40, MEXICO, DF 03810, MEXICO, Bd. 51, Nr. 5, Seiten 1231-1234, 1238, XP002217134
- WANG N ET AL: "Extrusion texturization of air-classified pea protein." JOURNAL OF FOOD SCIENCE 64 (3) 509-513 1999 DEP. OF APPLIED MICROBIOL. & FOOD SCI., UNIV. OF SASKATCHEWAN, SASKATOON, SASK. S7N 5A8, CANADA, XP002217135
- AGUILERA J M ET AL: "Air classification and extrusion of navy bean fractions." JOURNAL OF FOOD SCIENCE 1984 FOOD PROTEIN RES. & DEVELOPMENT CENT., TEXAS A&M UNIV., COLLEGE STATION, TEXAS 77843-2476, USA, Bd. 49, Nr. 2, Seiten 543-546, XP002217136
- ANDERSON A K ET AL: "Changes in disulfide and sulhydryl contents and electrophoretic patterns of extruded wheat flour proteins." CEREAL CHEMISTRY 77 (3) 354-359 2000 CORRESPONDENCE (REPRINT) ADDRESS, P. K. W. NG, DEP. OF FOOD SCI. & HUMAN NUTR., MICHIGAN STATE UNIV., EAST LANSING, MI 48824, USA. E-MAIL NGP(A)PILOT.MSU.EDU, XP002217137
- JONES C R ET AL: "THE SEPARATION OF FLOUR INTO FRACTIONS OF DIFFERENT PROTEIN CONTENTS BY MEANS OF AIR CLASSIFICATION" JOURNAL OF BIOCHEMICAL AND MICROBIOLOGICAL TECHNOLOGY AND ENGINEERING, XX, XX, Bd. 1, Nr. 1, 1959, Seiten 77-98, XP002063130

## Beschreibung

Die Erfindung betrifft ein Lebensmittel mit texturierten Proteinen sowie ein Verfahren zur Herstellung eines solchen.

Texturierte Proteine sind seit langem bekannt. Texturierte Proteine besitzen eine Faserstruktur, die bei geeigneter Herstellung dem Lebensmittel eine fleischähnliche Textur verleiht. Als Proteinquelle für die Herstellung von texturierten Proteinen sind beispielsweise Soja, Caseinate, Weizengluten, Baumwollsaat, Erdnuss, Sesam, Sonnenblumen, Saflor, Zein, Raps, Hefe, Molkenprotein, Amaranth, Blutplasma, Schlachtabgänge wie Lungen- und Magengewebe bekannt. Bei der Texturierung erfolgt unter Lösung intra-/intermolekularer Wechselwirkung eine Auffaltung der Peptid-Ketten und eine Stabilisierung der gestreckten Peptid-Ketten (Beta-Struktur) durch Ausbildung intra-/intermolekularer Wechselwirkung. Die Strukturänderung kann durch einen Extrusionsprozess erzielt werden. Als Ausgangsmaterial für den Extrusionsvorgang wird Sojamehl eingesetzt, das einen Proteingehalt von ungefähr 50% besitzt und auf einen Wassergehalt von 30 - 40 % gebracht wird. Die Masse wird in einem Extruder, bei Temperaturen von 120 - 180°C eingebracht. In dem Extruder wird die Masse in einen plastischen, viskosen Zustand überführt, in dem festes Material neben flüssigem Material vorliegt. Es erfolgt Hydradation, partielle Auffaltung und Streckung der globulären Proteine sowie deren Anordnung zu Proteinsträngen in Fließrichtung. Die geschmolzene Masse verlässt den Extruder, wo der Wasserdampf bei der Druckentlastung entweicht.

Aus Cereal Chemistry No. 77 (3), pp 354-359 ist bekannt, Mehl bei einem Eiweißgehalt von 9% mit Gluten, die ein Eiweißgehalt von 70% besitzen, zu mischen. Für unterschiedliche Mischungsverhältnisse erfolgt dann eine Extrusion.

Aus WO00/69276 ist ein Verfahren zur Herstellung von Fleischersatz aus texturiertem Protein bekannt, bei dem Sojamehl mit Weizengluten versetzt wird. Die Mischung wird extrudiert und nachfolgend mit einer Hammermühle zerkleinert.

Aus "Evaluation of Whole Amaranth Flour, Its Air-Classified Fractions, and Blends of These with Wheat and Oats as Possible Components for Infant Formulas" von A. Sanchez-Marroquin et al., Journal of Food Science, Volume 51, Nr. 5, 1986, Seiten 1231 ff. (XP-002217134) ist bekannt, Säuglingsnahrung aus windgesichtetem Amaranth-Mehl herzustellen. Die Säuglingsnahrung wird in einem Kochextruder aufgeschlossen und besitzt eine gute Wasserlöslichkeit.

Aus "Air Classification and Extrusion of Navy Bean Fractions" von Aguilera et al., Journal of Food Science, Volume 49 (1984), Seiten 543 ff. ist die Herstellung von texturierten Proteinen durch Extrusion bekannt. Hierbei wird die eiweißhaltige Fraktion eines Bohnenmehls Sojamehl mit Anteilen von 10, 20 oder 30% zugesetzt, so daß sich ein Eiweißgehalt von 51,8% oder mehr ergibt.

Aus "Extrusion Texturization of Air-Classified Pea Protein" von N. Wang et al. in Journal of Food Science, Volume 64, Nr. 3, 1999 (XP-002217135) ist ein Extrusionstexturierung von windgesichtetem Erbsen-Eiweiß bekannt, bei dem ein Eiweißanteil von 55,4% vorlag.

Der Erfindung liegt die Aufgabe zugrunde, ein Lebensmittel mit texturierten Proteinen und ein Verfahren zu dessen Herstellung bereitzustellen, dessen Proteingehalt nicht durch das künstliche Hinzusetzen von Gluten oder anderen denaturierten Proteinquellen erhöht wird, sondern bei dem der Proteingehalt der Zutaten bereits ausreicht, um texturierte Proteine als Fleischersatz zu bilden.

Erfindungsgemäß wird die Aufgabe durch ein Lebensmittel mit den Merkmalen aus Anspruch 1 gelöst. Vorteilhafte Ausgestaltungen sind in den Unteransprüchen enthalten.

Das erfindungsgemäße Lebensmittel ist aus einer wasserhaltigen Teigmasse hergestellt, deren Mehlanteil ein fraktioniertes Mehl aus Weizen und/oder anderen Rohfrüchten mit einem Proteingehalt von 15 Gew.-% im Trockenen bis 40 Gew.-% im Trockenen aufweist. Das fraktionierte Mehl enthält vorzugsweise einen durch Windsichtung erhöhten Proteinanteil Überraschenderweise hat sich herausgestellt, dass der Einsatz eines fraktionierten Mehls mit einem hohen Proteingehalt, der durch Fraktionierung des Mehls und nicht durch die Zugabe von Gluten erzielt wurde, bereits ausreicht, um Lebensmittel mit texturierten Proteinen herzustellen. Das fraktionierte Mehl ist vorzugsweise aus Weizen oder aus anderen Rohfrüchten hergestellt. Das fraktionierte Mehl besitzt beispielsweise eine Korngröße von weniger als 20µm. Der Auswahl von besonders feinem Korn für das fraktionierte Mehl liegt die Erkenntnis zugrunde, dass durch Feinmahlung und Windsichtung eine sogenannte Proteinverschiebung erzielt werden kann. Für die Feinmahlung mit nachfolgender Windsichtung bieten sich neben Weizenleguminosen, insbesondere Erbsen, Bohnen, Soja und Linsen sowie Lupinen, Amaranth und Quinoa an. Während das herkömmliche Mehl aus Weizen einen Proteingehalt von ungefähr 10% aufweist, wird durch die Feinmahlung eine "Fein"-Fraktion des Mehls mit 15% bis 40% Protein und eine entsprechende "Grob"-Fraktion mit einem Proteinanteil von unter 10% erzielt. Diese Fraktionen werden mit Hilfe der Windsichtung voneinander getrennt. Der große Vorzug des erfindungsgemäßen Lebensmittels liegt darin, dass naturbelassene Proteine eingesetzt werden, die nicht einer vorherigen thermischen Behandlung unterworfen waren.

Bevorzugt besitzt der Mehlanteil der Teigmasse 90% fraktioniertes Mehl und zu ungefähr 10% Weizenkeime.

Der Teigmasse wird ungefähr 70 - 90 Gew.-% Wasser bezogen auf den Mehlanteil zugesetzt, dem beispielsweise noch 1 bis 3 Gew.-% Salz bezogen auf den Mehlanteil hinzugefügt werden können.

Die erfindungsgemäße Aufgabe wird ebenfalls durch ein Herstellungsverfahren mit den Verfahrensschritten aus Anspruch 8 gelöst.

Das erfindungsgemäße Verfahren zur Herstellung eines Lebensmittels mit texturierten Proteinen, weist die Verfahrensschritte zur Herstellung einer Teigmasse, deren Erhitzung sowie Abkühlung und einen nachfolgenden Bratvorgang auf. Bei dem erfindungsgemäßen Verfahren wird eine Teigmasse hergestellt, deren Mehlanteil ein fraktioniertes Mehl mit einem vorzugsweise durch windsichtung enthalten Proteinanteil von 15 - 40 Gew.-% im Trockenen besitzt. Die Teigmasse wird erhitzt und nachfolgend abgekühlt. Die so hergestellten texturierten Proteine besitzen eine fleischähnliche Struktur.

Die Teigmasse wird vorzugsweise in Wasser für 5 bis 15 min. gekocht oder blanchiert, wobei die Teigmasse vor oder nach dem Kochen zu Teiglingen geformt werden kann. Die Teiglinge können vor dem Braten paniert werden, beispielsweise nach Art eines Wiener Schnitzels. Der panierte oder nicht panierte Teigling wird in Fett gebraten.

In einer ebenfalls bevorzugten Ausgestaltung wird die Teigmasse mit Hilfe eines Extruders hergestellt und erhitzt. Die Teigmasse wird in dem Extruder auf ungefähr 100 bis 180°C, vorzugsweise auf 145°C erhitzt. Fraktioniertes Mehl und Wasser werden bei der Extrusion in einem Verhältnis von 12:1 bis 2:1, vorzugsweise 5:1 bis 3:1 zugesetzt. Nach der Extrusion wird das Extrudat mit üblichen Trocknungsmethoden auf eine Restfeuchte von 3 bis 15%, vorzugsweise 9% nachgetrocknet.

Bei einer bevorzugten Weiterführung des erfindungsgemäßen Herstellungsverfahrens werden bei der Extrusion der Teigmasse mit einem Mehlanteil, der 15 bis 40 Gew.-% Protein und durch Windsichtung einen erhöhten Proteingehalt aufweist, hergestellte Chunks mit einem Durchmesser von ungefähr 2 bis 10 mm in Wasser aufgequollen. Mit fraktioniertem Mehl und wahlweise Paniermehl sowie einer Gewürzmischung vermengt wird die Teigmasse durchgeknetet. Der Teigmasse kann noch ein Ei zugegeben werden. Insgesamt entsteht eine formbare Masse, die in ihrer Konsistenz mit einem Fleisch-Frikadellenteig vergleichbar ist. Die durchgeknetete Masse wird nachfolgend geformt und gebraten.

In einer weiteren vorteilhaften Ausgestaltung werden die bei der Extrusion der Teigmasse hergestellten Chunks gebrochen, vorzugsweise auf einen Durchmesser von 2 bis 5 mm, und mit fraktioniertem Mehl und Wasser vermischt und durchgeknetet. Nachfolgend wird die durchgeknetete Teigmasse geformt, beispielsweise in Form eines Schnitzels und gebraten. Auch ist es möglich, die durchgeknetete Teigmasse in Därme, beispielsweise Wurstdärme oder größere Darmbeutel, wie sie bei der Herstellung von Formschinken eingesetzt werden, zu verfüllen und anschließend zu blanchieren und/oder zu kochen. Die so vorgeformte Masse wird fest und kann dann bedarfsweise in Scheiben geschnitten werden, die nachfolgend ggf. paniert und gebraten werden können.

Bei einem Herstellungsverfahren hat es sich als vorteilhaft erwiesen, der Teigmasse bekannte Zusätze zur Faser- und/oder Strukturverbesserung zuzusetzen. Ein solcher Zusatz kann beispielsweise eine 0,3 %ige schweflige Säure sein.

Der Teigmasse können ebenfalls Zusätze zur Texturverbesserung aus Fasern zugesetzt werden. Hierzu bieten sich insbesondere Fasern aus Bambus, Weizen, Hafer, Hülsenfrüchten, Reis und dergleichen an.

Die Erfindung wird anhand der folgenden Beispiele weiter erläutert.

### Beispiel 1:

90% fraktioniertes Weizenmehl (VK Weizen Plus) mit einem Proteingehalt von 15 bis 40%, 10% Weizenkeime, 2% Salz sowie 80% Wasser werden mit einem Spiralkneter zunächst 5 min. langsam und nachfolgend 3 min. schnell geknetet. Die Teigtemperatur beträgt hierbei mindestens 25°C und vorzugsweise 30°C.

Aus der Teigmasse wird eine Stangenform gebildet, von der geeignete Mengen abgeschnitten und steakartig geformt werden. Die Teiglinge werden 10 min. in Wasser gekocht und anschließend abgekühlt. Der abgekühlte Teigling wird in Vollei geschwenkt und mit grob vermahlener Panade paniert. Der panierte Teigling wird beispielsweise in heißem Fett goldbraun gebraten und gewürzt. Jedoch ist auch eine reine Eipanade oder eine eifreie Panade möglich.

Nach der Abkühlung reduziert sich das Volumen etwas. Der Innenkörper besitzt eine huhnartige, feste und faserige Textur. Die Kruste besitzt ein typisches Röstaroma.

### Beispiel 2:

In einem Extruder wird ein fraktioniertes Mehl aus Weizen mit einem Proteinanteil von ungefähr 22 Gew.-% eingegeben. Gleichzeitig wird Wasser zugesetzt. Der Extruder besitzt eine zentral angeordnete Düse und ein zweiblättriges Messer.

Die. Temperaturen in dem Extruder mit drei Bereichen betragen im ersten Bereich 17 bis 19°C, im zweiten Bereich ungefähr 122°C, im dritten Bereich 145°C und an der Düse ungefähr 150°C. An der Düse können auch Temperaturen bis zu 190°C auftreten.

Das so fertiggestellte Extrudat wird anschließend auf eine Restfeuchte von ca. 9% getrocknet.

Das gewonnene Extrudat wird bei der Anwendung mit Wasser versetzt und kann als Hackfleischersatz für die Herstellung von in der Pfanne gebratenen Klößen, insbesondere von Frikadellen oder Nuggets eingesetzt werden.

### Beispiel 3:

Zur Herstellung einer fleischlosen Frikadelle werden 100 g Chunks als Endprodukt des Extrudats (beispielsweise aus Beispiel 2), ganz und nicht vermahlen, in 300 g Wasser gegeben. Die Chunks quellen im Wasser für ungefähr 25 - 30 min. auf. Den aufgequollenen Chunks wird eine Gewürzmischung zugegeben.

Eine bevorzugte Gewürzmischung besteht aus:

| | |
|---|---|
| 100 g | Zwiebeln |
| 1 | Ei |
| | Gewürze nach Geschmack |
| 50 g | fraktioniertes Mehl aus Weizen mit einem Proteinanteil von ungefähr 30 Gew.-% und |
| 100 g | Paniermehl. |

Die aufgequollenen Chunks werden mit den übrigen Zutaten vermengt, gewürzt und die Masse wird gut durchgeknetet. Nach einer Knetdauer von ungefähr 8 min. kann die Teigmasse geformt und gebraten werden.

Die vorstehende Rezeptur zur Herstellung einer Frikadelle oder zur Herstellung von Nuggets kann auch als Trockenprodukt vertrieben werden. Hierbei werden die Chunks und die Gewürzmischung separat in Trockenportionsbeutel abgepackt. Die Die Zwiebeln liegen dabei als Trockenzwiebeln vor. Auch ist es möglich, einen bereits in Frikadellenform ausgeformten Trockenportionsbeutel vorzusehen.

### Beispiel 4:

Bei der Herstellung eines Schnitzels mit hühnchenfleischähnlicher Konsistenz wird eine Teigmasse wie in Beispiel 1 hergestellt. Die Teigmasse wird nicht in Stangenform gebracht, sondern in einen Darmbeutel oder Portionsbeutel gefüllt. Mit diesem wird die Teigmasse blanchiert oder gekocht. Für die Zubereitung der vorgeformten und festen Masse kann je nach Bedarf der Teig scheibenweise abgeschnitten werden und wahlweise paniert, beispielsweise in Vollei geschwenkt, mit grob vermahlenen Maiskeim-Crispies paniert und in heißem Fett goldbraun gebraten werden.

Das so hergestellte Schnitzel besitzt einen weichen, zarten, huhnartigen, glatten Innenkörper mit einer angenehm krossen Kruste. Der Geschmack des Innenkörpers ist neutral, während die Kruste röst-aromatisch schmeckt.

### Beispiel 5:

Die nachfolgende Rezeptur gibt ein Beispiel für ein Schnitzel, bei dem der Zwischenschritt des Blanchierens entfällt.

Es werden Chunks aus der Extrusion von VK Weizen Plus mit einem Proteingehalt von 30% grob gebrochen, sodass sie einen Durchmesser von 2 - 5 mm aufweisen. 250 g der gebrochenen Chunks werden mit 250 g VK Weizen Plus-Mehl mit einem Proteingehalt von 30% vermischt. Der Mischung werden 50g stabilisierte Weizenkeime und 10 g Salz sowie 350 - 500 g Wasser, je nach Wasseraufnahme des Teigs, zugegeben.

Die Masse wird ungefähr 8 min. geknetet bis eine bindige Masse entstanden ist, vorzugsweise erfolgt die Knetung 5 min. langsam und 3 min. schnell. Eine Formung kann wieder in schnitzelähnlichen Stücken oder wie in den vorstehenden Beispielen erfölgen.

Das Beispiel zeigt, dass mit den gebrochenen Chunks ein homogener Teig hergestellt werden kann, bei dem der Zwischenschritt des Kochens oder Blanchierens entfallen kann, sodass der fertige Teig direkt paniert und gebraten werden kann.

Die vorstehenden Beispiele bezogen sich jeweils auf windgesichtetes Weizenmehl. Es ist jedoch ebenso möglich, windgesichtetes Mehl aus Erbsen, Bohnen, Soja, Linsen, Lupinen, Amaranth und Kinoa einzusetzen. Es können auch Mischungen von Mehlen eingesetzt werden. So kann beispielsweise 90% eines fraktionierten Weizenmehls mit 10% windgesichtetem Erbsenmehl gemischt werden.

Eine Texturverbesserung der Teigmasse kann durch den Zusatz von Fasern gewonnen werden, die beispielsweise aus Bambus, Weizen, Hafer, Hülsenfrüchten und Reis hergestellt sind. Auch sonstige Zusätze zur Verbesserung der Textur, wie beispielsweise schweflige Säure, haben sich als vorteilhaft erwiesen.

## Patentansprüche

1. Lebensmittel mit texturierten Proteinen, das aus einer wasserhaltigen Teigmasse hergestellt ist, deren Mehlanteil ein fraktioniertes Mehl aus Weizen und/oder anderen Rohfrüchten mit einem Proteinanteil von 15 bis 40 Gew.-% im Trockenen aufweist.

2. Lebensmittel nach Anspruch 1, **dadurch gekennzeichnet, dass** das fraktionierte Mehl durch Windsichtung einen erhöhten Proteinanteil aufweist.

3. Lebensmittel nach Anspruch 1 oder 2, **dadurch gekennzeichnet, dass** als fraktioniertes Mehl ein Mehl aus Leguminosen und/oder Lupinen, Amaranth und Quinoa vorgesehen ist.

4. Lebensmittel nach einem der Ansprüche 1 bis 3, **dadurch gekennzeichnet, dass** der Mehlanteil zu ungefähr 90% aus dem fraktionierten Mehl und zu ungefähr 10% aus Weizenkeimen besteht.

5. Lebensmittel nach einem der Ansprüche 1 bis 4, **dadurch gekennzeichnet, dass** der Teigmasse ungefähr 70 bis 90 Gew.-% Wasser bezogen auf den Mehlanteil zugesetzt ist.

6. Lebensmittel nach Anspruch 5, **dadurch gekennzeichnet, dass** die Teigmasse ungefähr 1 bis 3 Gew.-% Salz bezogen auf den Mehlanteil aufweist.

7. Lebensmittel nach einem der Ansprüche 1 bis 6, **dadurch gekennzeichnet, dass** das fraktionierte Mehl im Wesentlichen eine Korngröße von weniger als 20µm besitzt.

8. Verfahren zur Herstellung eines Lebensmittels mit texturierten Proteinen, das die folgenden Verfahrensschritte aufweist:
- Herstellen einer wasserhaltigen Teigmasse mit einem Mehlanteil, der ein fraktioniertes Mehl aus Weizen und/oder anderen Rohfrüchten mit einem Proteinanteil von 15 bis 40 Gew.-% im Trockenen besitzt,
- Erhitzen der Teigmasse und nachfolgendes Abkühlen und
- Braten der Teigmasse.

9. Verfahren nach Anspruch 8, **dadurch gekennzeichnet, dass**:
- der Mehlanteil ein fraktioniertes Mehl aus Weizen und/oder anderen Rohfrüchten mit einem durch Windsichtung erhöhten Proteinanteil aufweist.

10. Verfahren nach Anspruch 8 oder 9, **dadurch gekennzeichnet, dass** die Teigmasse in Wasser, vorzugsweise für 5 bis 15 min. gekocht und/oder blanchiert wird.

11. Verfahren nach Anspruch 10, **dadurch gekennzeichnet, dass** die Teigmasse vor oder nach dem Kochen und/oder Blanchieren zu Teiglingen geformt wird.

12. Verfahren nach Anspruch 11, **dadurch gekennzeichnet, dass** die Teiglinge vor dem Braten mit einer Eipanade oder einer eifreien Panade paniert werden.

13. Verfahren nach Anspruch 11 oder 12, **dadurch gekennzeichnet, dass** die Teiglinge in Fett gebraten werden.

14. Verfahren nach einem der Ansprüche 8 bis 13, **dadurch gekennzeichnet, dass** die Teigmasse mit Hilfe eines Extruders hergestellt und erhitzt wird.

15. Verfahren nach Anspruch 14, **dadurch gekennzeichnet, dass** die Teigmasse in dem Extruder auf ungefähr 100°C bis 180°C, vorzugsweise auf 145°C erhitzt wird.

16. Verfahren nach Anspruch 14 oder 15, **dadurch gekennzeichnet, dass** bei der Extrusion das fraktionierte Mehl und Wasser im Verhältnis von 12:1 bis 2:1, vorzugsweise von 5:1 bis 3:1 zugesetzt werden.

17. Verfahren nach einem der Ansprüche 14 bis 16, **dadurch gekennzeichnet, dass** das Extrudat nach herkömmlichen Trocknungsverfahren getrocknet wird.

18. Verfahren nach Anspruch 17, **dadurch gekennzeichnet, dass** das Extrudat auf einen Restfeuchtegehalt von ungefähr 9% getrocknet wird.

19. Verfahren nach einem der Ansprüche 14 bis 18, **dadurch gekennzeichnet, dass** bei der Extrusion hergestellte Chunks, vorzugsweise mit einem Durchmesser von ungefähr 2 bis 10 mm, in Wasser ausquellen, mit fraktioniertem Mehl und wahlweise Paniermehl sowie einer Gewürzmischung vermengt und durchgeknetet werden und die Teigmasse nachfolgend gebraten wird.

20. Verfahren nach einem der Ansprüche 14 bis 19, **dadurch gekennzeichnet, dass** bei der Extrusion hergestellte Chunks gebrochen und mit fraktioniertem Mehl und Wasser vermischt und durchgeknetet werden und nachfolgend die Teigmasse gebraten wird.

21. Verfahren nach Anspruch 19 oder 20, **dadurch gekennzeichnet, dass** die durchgeknetete Teigmasse in Därme oder Portionsbeutel verfüllt und blanchiert oder gekocht wird.

22. Verfahren nach einem der Ansprüche 8 bis 21, **dadurch gekennzeichnet, dass** der Teigmasse Zusätze jeglicher Art zur Faser- und/oder Strukturverbesserung zugesetzt sind.

23. Verfahren nach Anspruch 22, **dadurch gekennzeichnet, dass** der Teigmasse als Zusatz Fasern, insbesondere Fasern aus Bambus, Weizen, Hafer Hülsenfrüchten, Reis und dergleichen zugesetzt werden.

## Claims

1. Food product containing texturised proteins, which is made of an aqueous dough substance, the flour portion of which has a fractionated flour made of wheat and/or other raw fruits with a protein share of 15 to 40 dry wt. %.

2. Food product in accordance with claim 1, **characterized in that** the fractionated flour has an increased protein share through air sifting.

3. Food product in accordance with claim 1 or 2, **characterized in that** a flour made of legumes and/or lupines, amaranth and quinoa is provided as a fractionated flour.

4. Food product in accordance with one of claims 1 through 3, **characterized in that** the flour portion is made up of approx. 90 % fractionated flour and approx. 10 % wheat germ.

5. Food product in accordance with one of claims 1 through 4, **characterized in that** approx. 70 to 90 wt. % water based on the flour share is added to the dough substance.

6. Food product in accordance with claim 5, **characterized in that** the dough substance has approx. 1 through 3 wt. % of salt based on the flour share.

7. Food product in accordance with one of claims 1 through 6, **characterized in that** the fractionated flour primarily has a grain size of less than 20µm.

8. Method for the production of a food product with texturised protein, which has the following procedural steps:
- Production of an aqueous dough substance with a flour share, which has a fractionated flour made of wheat and/or other raw fruit with a protein share of 15 through 40 dry wt. %,
- heating of the dough substance and subsequent cooling and
- frying of the dough substance.

9. Method in accordance with claim 8, **characterized in that**:
- the flour share has a fractionated flour made of wheat and/or other raw fruits with a protein share increased through air sifting.

10. Method in accordance with claim 8 or 9, **characterized in that** the dough substance is cooked and/or blanched in water, preferably for 5 to 15 min.

11. Method in accordance with claim 10, **characterized in that** the dough substance is shaped into dough portions before or after cooking and/or blanching.

12. Method in accordance with claim 11, **characterized in that** the dough portions are coated with an egg breadcrumb coating or an egg-free breadcrumb coating before frying.

13. Method in accordance with claim 11 or 12, **characterized in that** the dough portions are frying in oil.

14. Method in accordance with one of claims 8 through 13, **characterized in that** the dough substance is produced and heated using an extruder.

15. Method in accordance with claim 14, **characterized in that** the dough substance is heated in the extruder to approx. 100 °C to 180 °C, preferably to 145 °C.

16. Method in accordance with claim 14 or 15, **characterized in that** the fractionated flour and water are added at a ratio of 12:1 to 2:1, preferably 5:1 to 3:1, during extrusion.

17. Method in accordance with claims 14 through 16, **characterized in that** the extrudate is dried according to conventional drying processes.

18. Method in accordance with claim 17, **characterized in that** the extrudate is dried to a remaining moisture content of approx. 9 %.

19. Method in accordance with one of claims 14 through 18, **characterized in that** chunks produced during the extrusion, preferably with a diameter of approx. 2 to 10 mm swell up in water, are added to fractionated flour and optionally breadcrumbs as well as a herb mixture and are kneaded and the dough substance is then fried.

20. Method in accordance with one of claims 14 through 19, **characterized in that** chunks produced during extrusion are broken and mixed with fractionated flour and water and are kneaded and the dough substance is then fried.

21. Method in accordance with claim 19 or 20, **characterized in that** the kneaded dough substance is used to fill intestines or portion bags and is blanched or cooked.

22. Method in accordance with one of claims 8 through 21, **characterized in that** all types of additives for improving the fiber and/or structure are added to the dough substance.

23. Method in accordance with claim 22, **characterized in that** fibers, in particular fibers made of bamboo, wheat, oats, legumes, rice, etc., are added to the dough substance.

## Revendications

1. Produit alimentaire contenant des protéines texturées, qui est réalisé à partir d'une masse de pâte contenant de l'eau, dont la proportion de farine présente une farine fractionnée à partir de froment et/ou d'autres grains crus avec une proportion de protéines de 15 à 40 %-poids à sec.

2. Produit alimentaire selon la revendication 1, **caractérisé en ce que** la farine fractionnée présente une proportion de protéines accrue par criblage à l'air.

3. Produit alimentaire selon la revendication 1 ou 2, **caractérisé en ce que**, en tant que farine fractionnée, il est prévu une farine issue de légumineuses et/ou de lupins, d'amarante et de quinoa.

4. Produit alimentaire selon une des revendications 1 à 3, **caractérisé en ce que** la proportion de farine se compose pour environ 90 % de la farine fractionnée et environ 10 % de germes de froment.

5. Produit alimentaire selon une des revendications 1 à 4, **caractérisé en ce que** environ 70 à 90 %-poids d'eau, rapportés à la proportion de farine, sont ajoutés à la masse de pâte.

6. Produit alimentaire selon la revendication 5, **caractérisé en ce que** la masse de pâte présente environ 1 à 3 %-poids de sel, rapportés à la proportion de farine.

7. Produit alimentaire selon une des revendications 1 à 6, **caractérisé en ce que** la farine fractionnée possède essentiellement une taille de grains inférieure à 20 µm.

8. Procédé de réalisation d'un produit alimentaire contenant des protéines texturées qui présente les étapes de procédé suivantes :
- réalisation d'une masse de pâte contenant de l'eau, avec une proportion de farine qui possède une farine fractionnée issue de froment et/ou d'autres grains crus avec une proportion de protéines de 15 à 40 %-poids à sec,
- chauffage de la masse de pâte suivi d'un refroidissement et
- cuisson de la masse de pâte.

9. Procédé selon la revendication 8, **caractérisé en ce que** :
- la proportion de farine présente une farine fractionnée issue de froment et/ou d'autres grains crus contenant une proportion de protéines accrue par criblage à l'air.

10. Procédé selon la revendication 8 ou 9, **caractérisé en ce que** la masse de pâte est cuite et/ou blanchie dans de l'eau, de préférence pendant 5 à 15 minutes.

11. Procédé selon la revendication 10, **caractérisé en ce que** la masse de pâte, avant ou après la cuisson et/ou le blanchiment, est formée en pâtons.

12. Procédé selon la revendication 11, **caractérisé en ce que**, avant la cuisson, les pâtons sont panés avec une panure à l'oeuf ou une panure sans oeuf.

13. Procédé selon la revendication 11 ou 12, **caractérisé en ce que** les pâtons sont cuits dans de la graisse.

14. Procédé selon une des revendications 8 à 13, **caractérisé en ce que** la masse de pâte est réalisée à l'aide d'une extrudeuse et chauffée.

15. Procédé selon la revendication 14, **caractérisé en ce que** la masse de pâte est chauffée dans l'extrudeuse à environ 100 °C à 180 °C, de préférence à 145 °C.

16. Procédé selon la revendication 14 ou 15, **caractérisé en ce que**, lors de l'extrusion, la farine fractionnée et l'eau sont ajoutées selon un rapport de 12:1 à 2:1, de préférence de 5:1 à 3:1.

17. Procédé selon une des revendications 14 à 16, **caractérisé en ce que** l'extrudat est séché selon des procédés de séchage classiques.

18. Procédé selon la revendication 17, **caractérisé en ce que** l'extrudat est séché jusqu'à une teneur en humidité résiduelle d'environ 9 %.

19. Procédé selon une des revendications 14 à 18, **caractérisé en ce que** des fragments réalisés lors de l'extrusion, de préférence avec un diamètre d'environ 2 à 10 mm, gonflent dans l'eau, sont mélangés et pétris avec de la farine fractionnée et au choix avec la farine de panure ainsi qu'avec un mélange d'épices, et **en ce que** la masse de pâte est ensuite cuite.

20. Procédé selon une des revendications 14 à 19, **caractérisé en ce que** des fragments réalisés lors de l'extrusion sont cassés, et mélangés et pétris avec de la farine fractionnée et de l'eau et **en ce que** la masse de pâte est ensuite cuite.

21. Procédé selon la revendication 19 ou 20, **caractérisé en ce que** la masse de pâte pétrie est placée dans des boyaux ou des pochettes de portion et blanchie ou cuite.

22. Procédé selon une des revendications 8 à 21, **caractérisé en ce que** des additifs de toute nature sont ajoutés à la masse de pâte pour améliorer les fibres et/ou la structure.

23. Procédé selon la revendication 22, **caractérisé en ce que**, à la masse de pâte, on ajoute en tant qu'additif, des fibres, en particulier des fibres de bambous, de froment, d'avoine, de plantes légumineuses, de riz et similaires.
